(19) Europäisches Patentamt
European Patent Office
Office européen des brevets

(11) **EP 2 806 189 B1**

(12) **EUROPÄISCHE PATENTSCHRIFT**

(45) Veröffentlichungstag und Bekanntmachung des Hinweises auf die Patenterteilung:
**27.07.2016 Patentblatt 2016/30**

(51) Int Cl.:
***F16H 57/04*** *(2006.01)*

(21) Anmeldenummer: **14168224.5**

(22) Anmeldetag: **14.05.2014**

(54) **Verfahren zum Betrieb eines Ölfiltersystems**

Method for operating an oil filter system

Procédé destiné au fonctionnement d'un système de filtre à huile

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.05.2013 DE 102013008739**

(43) Veröffentlichungstag der Anmeldung:
**26.11.2014 Patentblatt 2014/48**

(73) Patentinhaber: **AUDI AG**
**85045 Ingolstadt (DE)**

(72) Erfinder:
• **Ammler, Stefan**
**86673 Bergheim (DE)**
• **Schuller, Dietmar**
**93336 Altmannstein (DE)**
• **Fleischmann, Hans-Peter**
**85134 Stammham (DE)**

(56) Entgegenhaltungen:
**WO-A1-2012/121201      DE-A1-102007 037 525**
**DE-U1-202009 007 593   GB-A- 2 418 988**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Betrieb eines Ölfiltersystems für ein Getriebeöl einer Getriebeanordnung mit einer Kupplung bzw. Bremse nach dem Oberbegriff des Anspruchs 1.

Ein allgemein bekanntes Ölfiltersystem weist einen Filterkreislauf mit wenigstens einem Ölfilter, eine Hydraulikpumpe mit einem elektrischen oder elektrisch überlagerten Antrieb sowie eine Steuereinrichtung auf. Dabei wird in an sich bekannter Weise das ATF-Öl (Automatic Transmission Fluid) im Getriebe nur gefiltert, wenn die Hydraulikpumpe aufgrund einer Druckanforderung beziehungsweise Kühlölanforderung elektrisch angesteuert wird, bzw. bei einem überlagerten Antrieb der mechanische Antrieb aktiviert ist.

Nachteilig an diesem Verfahren zum Betrieb des Ölfiltersystems für das ATF-Öl ist, dass ein Filterbedarf aufgrund von Urschmutz, entsprechend einer Ölverschmutzung bei der Fertigung, sowie ein Filterbedarf durch Verschleiß, insbesondere durch einen Kupplungsabrieb nicht bedarfsabhängig berücksichtigt wird.

Zudem ist ein System zur Pflege und/oder Qualitätsüberwachung von Öl in einem Getriebeölkreislauf bekannt (DE 20 2009 007 593 U1). Das System umfasst insbesondere eine Filteranordnung zur Filterung des Öls mit wenigstens einem Mikrofilter und eine Messung zur Ermittlung des Zustandes des Öls mit wenigstens einem kalibrierbaren Sensor. Die Messanordnung mit nachgeschalteter Auswerteeinheit dient in Verbindung mit einem Anzeigegerät zur Information über die aktuelle Ölqualität.

Weiter ist ein Verfahren zum Betrieb eines Ölfiltersystems bekannt (DE 10 2007 037 525 A1) gemäß dem Oberbegriff des Anspruchs 1, bei dem mit einem Ölsensor der Verschmutzungsgrad des Öls erfasst wird. Je nach der gemessenen Größe des Verschmutzungsgrads werden in einer Filterelementanordnung unterschiedliche Durchströmwege für unterschiedlich angepasste Filterwirkungen geschaltet.

Aus der WO 2012/121201 A1 ist ein bei Elektrofahrzeugen eingesetztes Verfahren bekannt, bei dem der Verschmutzungsgrad des Öls vor dem Anfahren erfasst wird und bei einer Überschreitung eines Grenzwerts das Anfahren verhindert wird.

Die GB 2 418 988 A beschreibt ein Verfahren, mit dem die Rußkonzentration im Öl genauer abgeschätzt werden kann.

Aufgabe der Erfindung ist es, ein Verfahren zum Betrieb eines Ölfiltersystems für ein Getriebeöl einer Getriebeanordnung mit einer Kupplung bzw. Bremse vorzuschlagen, mit dem das Getriebeöl in Abhängigkeit des Schmutzeintrags bedarfsgerecht filtriert wird.

Diese Aufgabe wird gelöst mit den Merkmalen der unabhängigen Ansprüche. Vorteilhafte Ausgestaltungen sind Gegenstand der darauf rückbezogenen Unteransprüche.

Erfindungsgemäß ist vorgesehen, dass der aktuelle Verschmutzungsgrad $V_a(\%)$ des Getriebeöls indirekt durch ein Verschmutzungsmodell bestimmt wird mit

$$V_a(\%) = V_{Start}(IW\%) - A(\%) + B(\%) + C(\%),$$

wobei

A(%) = f (Pumpenfördermenge)
B(%) = f (Kupplungs-Energieeintrag) und
C(%) = f (Getriebelaufleistung).

A(%) entspricht dabei einem Ölreinigungsgradanteil, welcher mit der Pumpenfördermenge, das heißt der Ölfördermenge durch den Ölfilter korreliert ist. (B%) und C(%) tragen zum Verschmutzungsgrad bei und sind mit dem Kupplungs-Energieeintrag beziehungsweise der Getriebelaufleistung korreliert.

Das Verschmutzungsmodell wird bei der Fertigung/Endabnahme der Getriebeanordnung für einen ersten Systemstart auf einen frei wählbaren Initial-Wert entsprechend $V_{Start}(IW\%)$ zur Berücksichtigung von Urschmutz, das heißt zur Berücksichtigung eines herstellungsbedingten Verschmutzungsgrads initialisiert. Im weiteren Verlauf wird das Verschmutzungsmodell mit A(%) dekrementiert, wodurch der Verschmutzungsgrad sinkt, sowie mit B(%) und C(%) inkrementiert, wodurch der Verschmutzungsgrad steigt.

Im weiteren Verfahrensverlauf wird der aktuelle Verschmutzungsgrad $V_a(\%)$ mit einem festgelegten Verschmutzungsgrad-Schwellwert $V_S(\%)$ verglichen und bei einer Überschreitung des Schwellwerts $V_S(\%)$ wird der Antrieb der Hydraulikpumpe für den Filterkreislauf angesteuert und eingeschaltet. Durch die Dekrementierung mit A(%) wird der Verschmutzungsgrad $V_a(\%)$ solange reduziert, bis der Verschmutzungsgrad-Schwellwert $V_S(\%)$ vermindert um einen festgesetzten Hysteresewert VH(%) vom aktuell ermittelten Verschmutzungsgrad $V_a(\%)$ unterschritten wird.

Der aktuelle Verschmutzungsgrad ($V_a(\%)$) wird in einem nichtflüchtigen Speicher der Steuereinheit gespeichert und jeweils bei einem nachfolgenden Systemstart als initialer Startwert ($V_{Start}$(%)) verwendet.

Durch die Verwendung des erfindungsgemäßen Verschmutzungsmodells kann eine aufwendige und mit großen Messtoleranzen behaftete Messeinrichtung zur direkten Erfassung des Ölverschmutzungsgrads entfallen. Zudem wird die Filtereinrichtung dann aber auch nur dann betrieben, wenn dies durch den ermittelten Ölverschmutzungsgrad erforderlich ist. Dies führt einerseits zu einer zweckmäßigen bedarfsgerechten Ölpflege bei einem energieeffizienten Betrieb des Ölfiltersystems.

In einer besonders bevorzugten Weiterbildung des Verfahrens wird die Ansteuerung und Einschaltung des elektrischen Pumpenantriebs nur freigegeben, wenn der aktuelle Ladezustand einer Batterie oder der Lastzustand eines Generators über einem Schwellwert liegt, der insbesondere hinsichtlich einer positiven $CO_2$-Bilanz aktuell ermittelt wird.

In einer weiteren bevorzugten Ausgestaltung des Verfahrens wird die Öltemperatur gemessen und jeweils bei einer Ansteuerung eine öltemperaturabhängige Drehzahl für den Betrieb der Hydraulikpumpe angefordert, wobei die Öltemperaturabhängigkeit der Drehzahl anordnungsspezifizisch festlegbar ist.

Der im Verschmutzungsmodell den Verschmutzungsgrad reduzierende Anteil A(%) als Funktion der Pumpenfördermenge kann einfach dadurch gebildet werden, dass die Ölfördermenge durch den Filterkreislauf aus der erfassten Pumpendrehzahl, der Pumpenlaufdauer und dem bekannten Pumpenhubvolumen ermittelt wird. Diese Fördermenge wird dann mit einem Bewertungsfaktor multipliziert, der die konkreten Gegebenheiten hinsichtlich der Filterwirkung berücksichtigt.

Der den Ölverschmutzungsgrad erhöhende Anteil B(%) als - Funktion des Kupplungs-Energieeintrags kann einfach dadurch bestimmt werden, dass der erfasste Kupplungs-Energieeintrag als Leistung mal Zeit mit einem Bewertungsfaktor multipliziert wird, der die konkreten Gegebenheiten für die Erhöhung des Verschmutzungsgrads berücksichtigt.

Ebenso kann der auf die Getriebelaufleistung seit letzter Berechnung zurückgehende Ölverschmutzungsgradanteil C(%) als Funktion der Getriebelaufleistung einfach dadurch ermittelt werden, dass die Getriebelaufleistung mit einem Bewertungsfaktor multipliziert wird, der die konkreten Gegebenheiten für diesen Anstieg der Ölverschmutzung berücksichtigt.

Das Verfahren betrifft insbesondere ein Getriebeöl als sogenanntes ATF-Öl (Automatic Transmission Fluid) in einem Automatik-Getriebe mit internem Filter eines Kraftfahrzeugs.

Anhand einer Zeichnung wird die Erfindung weiter erläutert.

Die einzige Figur zeigt stark schematisiert eine nicht im Detail dargestellte Getriebeanordnung mit Kupplung 1 in einem Getriebeölbad 2 sowie ein Ölfiltersystem 3.

Das Ölfiltersystem 3 umfasst einen Pumpenzulauf 4 zu einer Hydraulikpumpe 5, die elektrisch betrieben und von einer Steuereinheit 6 gesteuert wird.

Der Hydraulikpumpe 5 ist ein Ölfilter 7 nachgeschaltet, dessen Ausgang über eine Ölablaufleitung 8 mit dem Getriebeölbad 2 verbunden ist.

Zudem können gegebenenfalls steuerbare Absperr- oder Mehrwegeventile insbesondere für Ölbypassleitungen vorgesehen sein, von denen hier ein Ventil 9 beispielhaft strichliert eingezeichnet ist. Die Stellungen solcher Ventile 9 sind im nachfolgenden Verschmutzungsmodell insbesondere bei der Ermittlung von A(%) als Funktion der Pumpenfördermenge durch den Ölfilter 7 zu berücksichtigen.

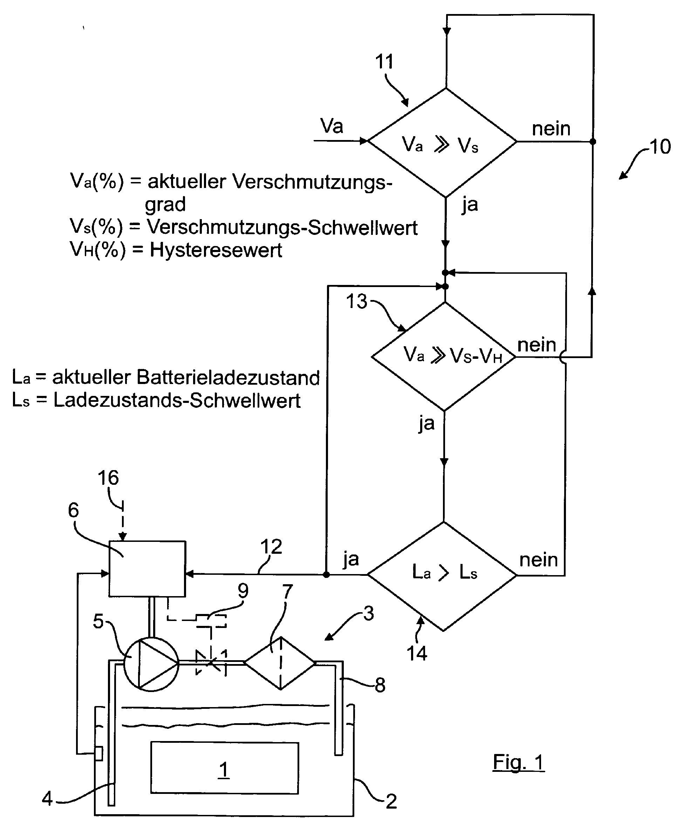

Weiter ist in Fig. 1 ein Flussdiagramm 10 für den Betrieb der Steuereinheit 6 schematisch dargestellt.

Wesentlich ist die Ermittlung eines aktuellen Verschmutzungsgrads $V_a$(%) des Öls mittels eines Verschmutzungsmodells:

Dazu wird für einen ersten Systemstart mit einem frei wählbaren Initialwert IW% nach der Herstellung/Auslieferung eine Startverschmutzung von 100% initial vorgegeben, von der ein auf die Pumpenfördermenge zurückgehender Ölreinigungsgradanteil A(%) dekrementiert wird. Umgekehrt wird jeweils ein die Ölverschmutzung erhöhender Anteil B(%), der auf einem Kupplungsabrieb beruht, sowie ein entsprechender Anteil C(%), der auf einer Getriebelaufleistung beruht, im Verschmutzungsmodell inkrementiert. Für nachfolgende Systemstarts wird jeweils der letzte in einem nichtflüchtigen Speicher gespeicherte aktuelle Verschmutzungsgrad als Startwert verwendet.

Wie aus dem Flussdiagramm 10 ersichtlich, wird an der Vergleichsstelle 11 ermittelt, ob der aktuelle Verschmutzungsgrad $V_a$(%) auf einen Wert höher als ein vorgegebener Verschmutzungs-Schwellwert $V_S$(%) angestiegen ist. Dann soll über die Steuerleitung 12 mittels der Steuereinheit 6 die Hydraulikpumpe 5 für eine Ölfilterung eingeschaltet werden.

Dies soll aber nur dann möglich sein, wenn eine Freigabe an der Vergleichsstelle 14 dadurch erfolgt, dass ein aktueller Batterieladezustand $L_a$ für den Betrieb des elektrischen Pumpenantriebs größer als ein vorgegebener Ladezustands-Schwellwert $L_s$ ist.

Die Hydraulikpumpe bleibt entsprechend der Vergleichsstelle 13 so lange eingeschaltet, bis durch den Betrieb des Ölfiltersystems 3 der aktuelle Verschmutzungsgrad $V_a$(%) unter den Verschmutzungsschwellwert $V_S$(%) vermindert um einen Hysteresewert $V_H$(%) reduziert ist.

Die Hydraulikpumpe 5 kann gegebenenfalls auch in Abhängigkeit anderer Kriterien eingeschaltet werden, was mit dem strichlierten Pfeil 16 schematisch angegeben ist. Auch eine solche Pumpeneinschaltung wird bei der Ermittlung des Ölreinigungsgradanteils A(%) und damit bei der Ermittlung des aktuellen Verschmutzungsgrads $V_a$(%) berücksichtigt.

**Patentansprüche**

1. Verfahren zum Betrieb eines Ölfiltersystems (3) für ein Getriebeöl einer Getriebeanordnung (1) mit
einer Kupplung bzw. Bremse und
einem Filterkreislauf, der wenigstens einen Ölfilter (7) und eine Hydraulikpumpe (5) mit einem elektrischen oder elektrisch überlagerten Antrieb und eine Steuereinrichtung (6, 10) aufweist, wobei mit dieser der Antrieb der Hydraulikpumpe (5) angesteuert und eingeschaltet wird,
**dadurch gekennzeichnet,**
**dass** der aktuelle Verschmutzungsgrad $V_a$ des Getriebeöls indirekt durch ein Verschmutzungsmodell bestimmt wird, mit

$$V_a = V_{Start} - A + B + C$$

mit einem Ölreinigungsgradanteil A, der eine Funktion der Pumpenfördermenge ist, einem Ölverschmutzungsgradanteil B, der eine Funktion des Kupplungs-Energieeintrags ist, und einem Ölverschmutzungsgradanteil C, der eine Funktion der Getriebelaufleistung ist,
wobei das Verschmutzungsmodell bei der Fertigung für einen ersten Systemstart auf einen frei wählbaren Initialwert entsprechend $V_{Start}$ zur Berücksichtigung von Urschmutz initialisiert und mit A dekrementiert sowie jeweils mit B und C inkrementiert wird, und jeweils bei einem nachfolgenden Systemstart der in einem nichtflüchtigen Speicher eines Steuergeräts der Steuereinrichtung (6, 10) gespeicherte letzte aktuelle Verschmutzungsgrad $V_a$ als initialer Startwert verwendet wird,
**dass** ein Verschmutzungsgrad-Schwellwert $V_S$ festgelegt und mit dem aktuellen Verschmutzungsgrad $V_a$ verglichen wird, und
**dass** bei einer Überschreitung des Verschmutzungsgrad-Schwellwerts $V_S$ der Antrieb der Hydraulikpumpe (5) so lange angesteuert und eingeschaltet wird, bis durch die Dekrementierung im Verschmutzungsmodell mit A der Verschmutzungsgrad-Schwellwert $V_S$ vermindert um einen festgesetzten Hysteresewert $V_H$ vom aktuell ermittelten Verschmutzungsgrad $V_a$ erreicht oder unterschritten wird.

2. Verfahren nach Anspruch 1, **dadurch gekennzeichnet, dass** die Ansteuerung und Einschaltung des elektrischen Pumpenantriebs nur erfolgt, wenn der aktuelle Ladezustand $L_a$ einer Batterie oder der Lastzustand eines Generators über einem Schwellwert $L_S$ liegt, der aktuell ermittelt wird.

3. Verfahren nach Anspruch 1 oder Anspruch 2, **dadurch gekennzeichnet, dass** die Öltemperatur erfasst und eine öltemperaturabhängige Drehzahl für den Betrieb der Hydraulikpumpe (5) angefordert und mit der Steuereinheit (6) vorgegeben wird.

4. Verfahren nach einem der Ansprüche 1 bis 3, **dadurch gekennzeichnet, dass** der durch die Reinigung im Filterkreislauf realisierte Ölreinigungsgradanteil bestimmt wird durch

$$A = Pumpenfördermenge \cdot x$$

wobei x ein die konkreten Gegebenheiten berücksichtigender Bewertungsfaktor ist.

5. Verfahren nach einem der Ansprüche 1 bis 4, **dadurch gekennzeichnet, dass** der von der Kupplung bzw. Bremse ausgehende Ölverschmutzungsgradanteil bestimmt wird durch

$$B = Kupplungs\text{-}Energieeintrag \cdot y,$$

wobei y ein die konkreten Gegebenheiten berücksichtigender Bewertungsfaktor ist.

6. Verfahren nach einem der Ansprüche 1 bis 5, **dadurch gekennzeichnet, dass** der auf die Getriebelaufleistung seit letzter Berechnung zurückgehende Ölverschmutzungsgradanteil bestimmt wird durch

$$C = \text{Getriebelaufleistung} \cdot z,$$

wobei z ein die konkreten Gegebenheiten berücksichtigender Bewertungsfaktor ist.

7. Verfahren nach einem der Ansprüche 1 bis 6, **dadurch gekennzeichnet, dass** das Getriebeöl ein sogenanntes Automatic Transmission Fluid-Öl in einem Automatik-Getriebe (1) mit internem Filter (7) eines Kraftfahrzeugs ist.

8. Verfahren nach einem der Ansprüche 1 bis 7, **dadurch gekennzeichnet, dass** für den Antrieb der Hydraulikpumpe (5) eine Traktionsbatterie und/oder eine Bordnetzbatterie und/oder ein Generator zur Bordnetzversorgung verwendet wird.

9. Fahrzeug mit einem nach einem der vorhergehenden Verfahrensansprüche betriebenen Ölfiltersystem.

**Claims**

1. Method of operating an oil filter system (2) for a gear oil of a gear arrangement (1) with
an coupling or brake and
a filter circulation which comprise at least one oil filter (7) and a hydraulic pump (5) with an electrical or electrically superimposed actuator and a control device (6, 10), wherein with the latter the actuator of the hydraulic pump (5) is controlled and switched on, **characterised in that**
the current degree of contamination $V_a$ of the gear oil is indirectly determined through the contamination model with

$$V_a = V_{Start} - A + B + C$$

with an oil cleaning degree A which is a function of the pump flow rate, an oil contamination degree B, which is a function of the clutch energy input, and an oil contamination degree C which is a function of the gear operating performance,
wherein during manufacturing the contamination model is initialised for a first system start at a freely selectable initial value $V_{Start}$ to take into account the original contamination and is decremenated with A and incremented with both B and C, and in the case of a following system start the last current degree of contamination $V_a$ stored in a non-volatile memory of the control device of the control system (6, 10) is used as the initial start value,
a contamination degree threshold value $V_s$ is determined and compared with the current degree of contamination $V_a$ and
on exceeding of the contamination degree threshold value $V_s$ the actuator of the hydraulic pump (5) is operated and switched on until through decrementation with A in the contamination model the degree of contamination threshold value $V_s$ is reduced and a determined hysteresis value $V_H$ of the currently determined contamination degree $V_a$ is reached or fallen below.

2. Method according to claim 1 **characterised in that** the control and switching on of the electrical pump actuator only takes place if the current charge status $L_a$ of a battery or the charge status of a generator is above a currently determined threshold value $L_s$

3. Method according to claim 1 or claim 2 **characterised in the** oil temperature is recorded and an oil temperature-dependent speed for operating the hydraulic pump (5) is requested and is defined with the control unit (6).

4. Method according to any one of claims 1 to 3 **characterised in that** the degree of oil cleaning about through cleaning in the filter circulation is determined through

$$A = \text{pump flow rate} \cdot x$$

where x is an evaluation factor taking the specific circumstances into account.

5. Method according to any one of claims 1 to 4 **characterised in that** the degree of oil contamination originating from the clutch or brake is determined through

$$B = \text{clutch energy input} \cdot y$$

where y is an evaluation factor taking the specific circumstances into account.

6. Method according to any one of claims 1 to 5 **characterised in that** the degree of oil contamination due to the gear operating performance since the last calculation is determined through

$$C = \text{gear operating performance} \cdot z$$

where z is an evaluation factor taking the specific circumstances into account.

7. Method according to any one of claims 1 to 6 **characterised in that** the gear oil is a so-called Automatic Transmission Fluid Oil in motor vehicle's automatic gearbox (1) with an internal filter (7).

8. Method according to any one of claims 1 to 7 **characterised in that** for actuating the hydraulic pump (5) a traction battery and/or an on-board power supply battery and/or a generator are used for the on-board power supply.

9. Motor vehicle with an oil filter system operated in accordance with any one of the preceding method claims.

**Revendications**

1. Procédé de fonctionnement d'un système de filtre à huile (3) pour une huile de boîte de transmission d'un aménagement de boîte de vitesses (1) comprenant :

   un embrayage ou un frein et
   un circuit de filtre, qui présente au moins un filtre à huile (7) et une pompe hydraulique (5) avec un entraînement électrique ou électriquement superposé et un dispositif de commande (6, 10), dans lequel celui-ci permet de commander et d'enclencher l'entraînement de la pompe hydraulique (5),

   **caractérisé en ce que** :

   le degré d'encrassement courant $V_a$ de l'huile de boîte de vitesses est déterminé indirectement par un modèle d'encrassement selon l'expression :

   $$V_a = V_{\text{Démar}} - A + B + C$$

   avec une fraction de degré d'épuration d'huile A, qui est fonction de la quantité de refoulement de la pompe, une fraction de degré d'encrassement de l'huile B, qui est fonction de l'apport d'énergie de l'embrayage et une fraction de degré d'encrassement de l'huile C, qui est fonction du kilométrage de la boîte de vitesses, dans lequel le modèle d'encrassement est initialisé à la fabrication pour un premier démarrage du système à une valeur $V_{\text{Démar}}$ correspondant à une valeur initiale librement sélectionnable afin de tenir compte de l'encrassement d'origine et est décrémenté de A ainsi qu'incrémenté de B et C, et, respectivement, lors d'un démarrage ultérieur du système, le dernier degré d'encrassement courant $V_a$ mémorisé dans une mémoire non volatile d'un appareil de commande du dispositif de commande (6, 10) est utilisé comme valeur de démarrage initiale, une valeur de seuil de degré d'encrassement $V_S$ est établie et comparée au degré d'encrassement courant $V_a$, et, lors d'un dépassement de la valeur de seuil de degré d'encrassement $V_S$, l'entraînement de la pompe hydraulique (5) est commandé et enclenché assez longtemps pour que, par décrémentation de A dans le modèle d'encrassement, soit atteinte ou dépassée par le bas la valeur de seuil de degré d'encrassement $V_S$ réduite d'une valeur d'hystérésis établie $V_H$ du degré d'encrassement couramment déterminé $V_a$.

**2.** Procédé selon la revendication 1, **caractérisé en ce que** la commande et l'enclenchement de l'entraînement de la pompe électrique ne se font que lorsque l'état de charge courant $L_a$ d'une batterie ou l'état de charge d'une génératrice se situe au-dessus d'une valeur de seuil $L_S$ qui est couramment déterminée.

**3.** Procédé selon la revendication 1 ou la revendication 2, **caractérisé en ce que** la température de l'huile est détectée et un nombre de tours dépendant de la température de l'huile est exigé pour le fonctionnement de la pompe hydraulique (5) et est prédéfini avec l'unité de commande (6).

**4.** Procédé selon l'une quelconque des revendications 1 à 3, **caractérisé en ce que** la fraction de degré d'épuration d'huile réalisée par le nettoyage dans le circuit de filtre est déterminée par l'expression :

$$A = \text{quantité de refoulement de la pompe} \cdot x$$

dans laquelle x est un facteur d'évaluation faisant intervenir les données concrètes.

**5.** Procédé selon l'une quelconque des revendications 1 à 4, **caractérisé en ce que** la fraction de degré d'encrassement de l'huile venant de l'embrayage ou du frein est déterminée par l'expression :

$$B = \text{Apport d'énergie de l'embrayage} \cdot y$$

dans laquelle y est un facteur d'évaluation faisant intervenir les données concrètes.

**6.** Procédé selon l'une quelconque des revendications 1 à 5, **caractérisé en ce que** la fraction de degré d'encrassement de l'huile se rapportant au kilométrage de la boîte de vitesses depuis le dernier calcul est déterminée par l'expression :

$$C = \text{Kilométrage de la boîte de vitesses} \cdot z$$

dans laquelle z est un facteur d'évaluation faisant intervenir les données concrètes.

**7.** Procédé selon l'une quelconque des revendications 1 à 6, **caractérisé en ce que** l'huile de boîte de vitesses est ce que l'on appelle de l'huile fluide de transmission automatique dans une boîte de vitesses automatique (1) avec un filtre interne (7) d'un véhicule à moteur.

**8.** Procédé selon l'une quelconque des revendications 1 à 7, **caractérisé en ce que** l'on utilise pour l'entraînement de la pompe hydraulique (5) une batterie de propulsion et/ou une batterie embarquée et/ou une génératrice pour alimentation du réseau de bord.

**9.** Véhicule comportant un système de filtre à huile entraîné selon l'une quelconque des revendications précédentes.

$V_a(\%)$ = aktueller Verschmutzungsgrad
$V_s(\%)$ = Verschmutzungs-Schwellwert
$V_H(\%)$ = Hysteresewert

$L_a$ = aktueller Batterieladezustand
$L_s$ = Ladezustands-Schwellwert

Fig. 1

**EP 2 806 189 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202009007593 U1
- DE 102007037525 A1
- WO 2012121201 A1
- GB 2418988 A